# EUROPÄISCHE PATENTSCHRIFT

(11) **EP 1 238 834 B1**
(45) Veröffentlichungstag und Bekanntmachung des Hinweises auf die Patenterteilung: **05.07.2006**
(21) Anmeldenummer: 02003020.1
(22) Anmeldetag: 12.02.2002
(51) Int. Cl.: B60G 21/073, B60G 17/04

(54) **Aktives Fahrwerksystem eines Fahrzeugs**
Active vehicle suspension system
Système de suspension active d'un véhicule

(30) Priorität: 10.03.2001 DE 10111551
(43) Veröffentlichungstag der Anmeldung: 11.09.2002
(73) Patentinhaber: Bayerische Motoren Werke Aktiengesellschaft, 80809 München (DE)
(72) Erfinder: Van der Knaap, Albert, 2924 TM Krimpen aan den Ijssel (NL); Wimmer, Markus, 83052 Bruckmühl (DE); Wey, Torsten, Dr., 47239 Duisburg (DE)

(56) Entgegenhaltungen:
- EP-A- 0 315 163
- EP-A- 0 371 709
- EP-A- 0 963 868
- WO-A-00/69664
- DE-A- 2 807 299
- DE-A- 3 631 876
- DE-A- 3 841 771
- DE-A- 4 231 641
- US-A- 5 338 010
- US-A- 6 145 859

## Beschreibung

Die Erfindung betrifft ein aktives Fahrwerksystem eines Fahrzeugs, insbesondere eines zwei Achsen mit jeweils zwei Rädern aufweisenden Personenkraftwagens, nach dem Oberbegriff des Anspruchs 1.

Ein bekanntes aktives Fahrwerksystem, bei dem jedes Fahrzeug-Rad über ein Federelement sowie über eine als Dämpfer wirkende hydraulische Kolben-Zylinder-Einheit am Fahrzeug-Aufbau abgestützt ist und wobei jedem Fahrzeug-Rad ein hydraulischer Aktuator zugeordnet ist, mit Hilfe dessen eine zusätzliche Kraft zwischen Rad und Aufbau einleitbar ist, ist bspw. in der DE 42 31 641 C2 gezeigt sowie in Form des sog. Active-Body-Control-Systems von Mercedes Benz realisiert, das kurz in der DE-Zeitschrift "auto motor sport", Heft 10/1999, Seiten 72 - 74 beschrieben ist.

Das bekannte Active-Body-Control-System (ABC-System) besteht im wesentlichen aus einem Plunger-Aktuator, welcher in Reihe mit einem passiven Stahlfederelement sowie mit einem hierzu parallelen hydraulischen Dämpfer geschaltet ist, d.h. dass dieser sog. Plunger-Aktuator im wesentlichen in Reihe mit einem üblichen Federbein eines Personenkraftwagens angeordnet ist. Dabei erfolgt die Ansteuerung des Plunger-Aktuators für jedes Fahrzeug-Rad individuell über jeweils ein Regelventil. Die Energiebereitstellung übernimmt eine Hydraulikpumpe und ein Speichersystem, d.h. durch eine Hydraulikpumpe mit Speichersystem wird durch gezielte Ansteuerung des jeweiligen Regelventils der jeweils gewünschte bzw. von einem elektronischen System geeignet ausgewählte Plunger-Aktuator mehr oder weniger mit oder von Hydraulikmedium versorgt oder entsorgt.

Obwohl dieses sog. ABC-System grundsätzlich vorteilhaft ist, bestehen dennoch systemimmanente Nachteile. So erscheint die technische Darstellung des Systems aufwendig, weil zusätzlich zur konventionellen Radaufhängung für jedes Rad ein Aktuator, nämlich der sog. Plunger-Aktuator benötigt wird, der in einer Reihenschaltung mit einem üblichen Federbein die gewünschte Kraft einleitet. Nachdem für jedes Rad ein eigenes Regelventil benötigt wird, ergeben sich nicht nur hohe Kosten, sondern es besteht auch ein vergrößerter Bauraumbedarf, was insbesondere darauf zurückgeht, dass die Feder des Federbeins den Krafteinleitungspunkt bildet. Da diese Feder aus fahrwerkstechnischen Gründen relativ weich ausgelegt werden muss, ergeben sich große Verstellwege des Plunger-Aktuators. Auch aufgrund dieser großen Aktuatorwege sowie aufgrund der erforderlichen hohen Hydraulikdrücke sind bei diesem ABC-System doch Nachteile bezüglich Energiebedarf und Bandbreite vorhanden. Da es sich nämlich um ein volltragendes System handelt, muss die hydraulische Versorgung nämlich generell eine relativ große Leistung bereitstellen.

Beispielsweise aus der DE 38 41 771 A1 ist ein aktives Fahrwerk nach dem Oberbegriff des Anspruchs 1 bekannt, das einen geringeren Bauaufwand als das genannte ABC-System bedingt, indem die dem Federelement parallel geschaltete, auch als Dämpfer wirkende Kolben-Zylinder-Einheit gleichzeitig als Aktuator fungiert. Hierbei ist den im Zylinder der Kolben-Zylinder-Einheit beidseitig des Kolbens vorgesehenen Arbeitskammern des Aktuators jeweils eine eigene Hydraulik-Versorgungsleitung zugeordnet, von denen zumindest eine gezielt ansteuerbar ist.

Bei diesem aus der DE 38 41 771 A1 bekannten Stand der Technik ist über die üblichen Drosselleitungen im Kolben der Kolben-Zylinder-Einheit stets ein Austausch von Hydraulikmedium zwischen den beiden Arbeitskammern dieser Kolben-Zylinder-Einheit bzw. dieses Aktuators möglich, was dessen Wirkungsgrad dann, wenn die Kolben-Zylinder-Einheit als Aktuator wirken soll, ungünstig beeinflusst.

Ein demgegenüber verbessertes aktives Fahrwerk nach dem Oberbegriff des Anspruchs 1 aufzuzeigen, ist Aufgabe der vorliegenden Erfindung.
Die Lösung dieser Aufgabe ist dadurch gekennzeichnet, dass während einer Krafteinleitung zwischen Rad und Aufbau über den Aktuator durch gezielte Ansteuerung zumindest einer Versorgungsleitung zwischen den Aktuator-Arbeitskammern im wesentlichen kein Austausch von Hydraulikmedium möglich ist, und dass in den Hydraulik-Versorgungsleitungen der Aktuator-Arbeitskammern jeweils ein passives oder regelbares Dämpferventil vorgesehen ist. Vorteilhafte Aus- und Weiterbildungen sind Inhalt der Unteransprüche.

Zunächst sei im Zusammenhang mit dem Merkmal, dass der Aktuator ohne Zwischenschaltung eines weiteren, nennenswerte Federwege erlaubenden Federelemets am Fahrzeug-Aufbau abgestützt ist, darauf hingewiesen, dass selbstverständlich irgendein Gummielement zwischen dem Aktuator und dem Rad bzw. dem Aufbau vorgesehen sein kann, da derartige Gummielemente lediglich eine Isolierung im relativ hochfrequenten Bereich bieten und folglich keine nennenswerten Federwege erlauben. Die im Anspruch 1 enthaltene Angabe, dass kein Federelement zwischen Rad und Aufbau vorgesehen sei, bezieht sich auf größere Federwege erlaubende Wendelfedern oder dgl., die im bekannten Stand der Technik der niederfrequenten Abstützung des Aufbaus dienen, und die auch beim eingangs genannten Stand der Technik mit den dortigen Aktuatoren in Reihe geschaltet sind.

Es wirkt nun ein grundsätzlich an jeder Rad-Aufhängung bereits vorhandener Dämpfer im Sinne einer vorteilhaften Funktionsvereinigung gleichzeitig als Aktuator für die Stabilisierung des Fzg.-Aufbaus durch geeignete Krafteinleitung gegenüber dem jeweiligen Rad sowie auch für eine Höhen-Verstellung des Fzg.-Aufbaus gegenüber den Rädern. Aufgrund dieser vorteilhaften Funktionsvereinigung ergibt sich einerseits ein verringerter Aufwand durch eine reduzierte Zahl von Bauteilen, und andererseits wird nur ein Teil der Aufbaukräfte über die Aktuatoren geleitet, nachdem diesen weiterhin jeweils ein an sich übliches Federelement parallel geschaltet ist.

In anderen Worten ausgedrückt ist somit quasi eine teiltragende Aktivfeder vorgesehen. Das heißt, dass der vorgeschlagene Aktuator, der auch als aktiver Dämpfer bezeichnet werden kann, parallel zur ansonsten üblichen Tragfeder zwischen Fzg.-Aufbau und Rad eingesetzt wird. Dies hat den erheblichen Vorteil, dass dann, wenn keine aktiven Kräfte benötigt werden, was bspw. bei einer Geradeausfahrt des Fahrzeugs gilt, kein zusätzlicher Hydraulikdruck in die Aktuator-Arbeitskammern (oder auch Dämpferkammern) eingespeist werden muss. Hierdurch wird der Energieaufwand des Systems auf ein Minimum reduziert.

Selbstverständlich ist es für die Verwendung als Aktuator erforderlich, dass den Hydraulik-Kammern des Dämpfers bzw. Aktuators, die als Aktuator-Arbeitskammern bezeichnet werden, gezielt Hydraulikmedium zugeführt oder entnommen werden kann, um den sog. Aktuator-Kolben im Aktuator-Zylinder wie gewünscht bewegen und somit den Fzg.-Aufbau radindividuell gegenüber dem jeweiligen Rad anheben oder absenken zu können. Dies erfolgt über die genannten Hydraulik-Versorgungsleitungen, von denen je Aktuator zumindest eine gezielt ansteuerbar ist. Über diese gezielte Ansteuerung kann bei Vorliegen ausreichenden Hydraulikdruckes in die gewünschte Aktuator-Arbeitskammer zusätzliches Hydraulikmedium eingebracht werden, oder bei Anlegen eines gegenüber dem Druck in der jeweiligen Aktuator-Arbeitskammer niedrigeren Hydraulikdruckes eine Teilmenge von Hydraulikmedium aus dieser Arbeitskammer abgeführt werden, oder es kann - bevorzugt - im wesentlichen nur der Druck in einer Aktuatorkammer erhöht oder verringert werden, um hierdurch Wankbewegungen (oder auch Nickbewegungen) des Fzg.-Aufbaus praktisch zu verhindern. Wurde somit der Fahrzeug-Aufbau einmal in eine gewünschte Position gebracht, so kann oder soll diese Lage relativ zur Fahrbahnoberfläche bei Fortbewegung beibehalten werden, was unter dem Begriff "Sky-Hook-Regelung" bekannt ist.

Bei der erfindungsgemäß vorgeschlagenen Ausführungsform ist während einer Krafteinleitung zwischen Rad und Aufbau über den Aktuator durch gezielte Ansteuerung zumindest einer Versorgungsleitung zwischen den Aktuator-Arbeitskammern im wesentlichen kein Austausch von Hydraulikmedium möglich, was bedeutet, dass dann im Gegensatz zu üblichen hydraulischen Dämpfern eine Dichtung der beiden (ansonsten grundsätzlich üblichen) Hydraulik-Kammern gegeneinander benötigt wird, d.h. die beiden Dämpfer-Arbeitskammern oder hier auch Aktuator-Arbeitskammern sollten gegenseitig keinen direkten Volumenstrom über den im Aktuator-Zylinder verschiebbar angeordneten Kolben austauschen. Hiervon ausgenommen sind selbstverständlich Leckageverluste. Dabei können jedoch die Abdichtungen zwischen dem Aktuator-Kolben sowie dessen Kolbenstange und dem Aktuator-Zylinder so ausgelegt werden, dass ein Minimum an Losbrechreibung (resultierend aus der erforderlichen Vorspannung der Dichtungen) erzielt wird. Dann ist ein optimaler Abrollkomfort des Fahrzeugs erreichbar.

Es wird vorgeschlagen, in den Hydraulik-Versorgungsleitungen der Aktuator-Arbeitskammern jeweils ein passives oder regelbares Dämpferventil vorzusehen, da auf diese Weise der Aktuator äußerst wirkungsvoll gleichzeitig als Dämpfer wirken kann. Die gewünschte Dämpferwirkung wird dann insbesondere durch das Durchströmen von Hydraulikmedium durch diese Dämpferventile erzeugt. Dabei können die Dämpferventile durchaus unterschiedliche Dämpfungseigenschaften in Abhängigkeit von der Durchströmrichtung des Hydraulikmediums aufweisen. Mit passiven Dämpferventilen ist im übrigen eine im wesentlichen konstante Dämpferrate erzielbar, während mit (elektronisch) regelbaren Dämpferventilen gezielt eine jeweils gewünschte Dämpferrate einstellbar ist. Dann liegen praktisch keine Restriktionen vor, so dass jede gewünschte Dämpfungscharakteristik eingeregelt werden kann.

Es hat sich gezeigt, dass dann, wenn die aktive Zufuhr von Hydraulikmedium in eine Aktuator-Arbeitskammer stark gedrosselt wird und wenn gleichzeitig der in dieser Arbeitskammer herrschende Hydraulikdruck relativ niedrig ist, das sich in der Arbeitskammer befindende Hydraulikmedium unter Einwirkung der schnell fluktuierenden Anregungen aus den Fahrbahn-Unebenheiten leicht zur verschäumen und kavitieren beginnt. Die Folge hiervon könnte ein unsolides Hydraulikmedium in der (den) Arbeitskammer(n) sein, so dass sich der Aktuator wie eine weiche Feder verhalten würde. Dies kann zu einer reduzierten Dämpferfunktion des Aktuators führen, so dass dann ein sicherer Kontakt zwischen den Rädern und der Fahrbahn nicht mehr gewährleistet wäre.

Als Abhilfemaßnahme wird vorgeschlagen, jede Aktuator-Arbeitskammer über ein die Abfuhr von Hydraulikmedium verhinderndes Rückschlagventil mit einer sog. Minimaldruck-Versorgungsquelle zu verbinden, aus der unter derartigen Umständen Hydraulikmedium in die betroffene Aktuator-Arbeitskammer quasi nachgesaugt werden kann. Vorteilhafterweise sorgen diese Rückschlagventile für ein gegenüber konventionellen Dämpfern besseres Ansprechen der Aktuatoren bzw. Dämpfer hinsichtlich ihrer Dämpferfunktion, so dass die herkömmliche Vorspannung vom Hydraulikmedium durch eine Gasfeder überflüssig ist. Nur der Vollständigkeit halber sei darauf hingewiesen, dass es sich bei der sog. Minimaldruck-Versorgungsquelle auch um die Rücklaufleitung des Gesamtsystems in einen Tank für das Hydraulikmedium handeln kann.

Wenn als Druckregelventile zur Regelung der in den Versorgungsleitungen aktiven Hydraulikdrücke Druckbegrenzungsventile, insbesondere Proportionaldruckbegrenzungsventile verwendet werden, so ist ein bestmögliches dynamisches Verhalten des Gesamtsystems erzielbar. Gleiches gilt im übrigen für die Verwendung von regelbaren Druckminderventilen (bevorzugt Proportionaldruckminderventilen), die ebenso im hydraulischen Versorgungssystem der Dämpfer-Aktuatoren zum Einsatz kommen können, um Hydraulikmedium mit einem bestimmten Druck für die Aktuatoren bereitzustellen.

Was das dynamische Verhalten des Gesamtsystems betrifft, so hat sich gezeigt, dass die optimale Funktion durch eine Kombination einer relativ niederfrequenten Niveau-Regelfunktion in der Größenordnung von 1 Hz, einer mittelfrequenten Wankstabilisierung von bis zu 5 Hz und einer relativ hochfrequenten verstellbaren Dämpfung in der Größenordnung von bis zu 15 Hz erreichbar ist. Dabei sind bei einer Regelung der Kräfte in der Fahrzeug-Radaufhängung völlig unterschiedliche Anforderungen in der Auslegung des Führungsverhaltens und des Störverhaltens zu berücksichtigen. So ist es für die Minimierung des Energieverbrauchs und die Optimierung des Abrollkomforts wichtig, das Führungsverhalten, das in einer aktiven Funktion mit Energiezufuhr beeinflussbar ist, mit einer Bandbreite von maximal 5 Hz zu behandeln und das Störverhalten, d.h. das Verhalten der dynamischen (vertikalen) Fahrwerkskräfte unter Einwirkung hochfrequenter Anregungen aus der Fahrbahn eher mit den passiven Eigenschaften der Komponenten zu gestalten. Unter Berücksichtigung hiervon ermöglichen die vorgeschlagenen Druckregelventile ein dynamisches Verhalten des Gesamtsystems, das ähnlich ist mit dem Störverhalten von herkömmlichen Dämpfern, zumindest in einem höheren Frequenzbereich größer 5 Hz. Jedoch ist das Niveau der radbezogenen effektiven Dämpfung relativ gering, so dass der größte Dämpfungsanteil von den vorgeschlagen Dämpferventilen, die bevorzugt direkt in die Anschlüsse der Aktuator-Zylinder integriert sind, erzeugt wird.

Das Flächenverhältnis zwischen Kolbenfläche und Ringfläche innerhalb jedes Aktuators bzw. Dämpfer-Aktuators kann bevorzugt im Verhältnis 1:2 ausgeführt sein, da dies zu energetischen und regelungstechnischen Vorteilen führt. Nicht nur im Hinblick auf eine gewünschte Niveau-Regulierung, d.h. die Möglichkeit, den Fahrzeug-Aufbau gegenüber den Rädern anzuheben oder abzusenken, sondern auch hinsichtlich der Möglichkeit, den Fzg.-Aufbau durch geeignete Krafteinleitung zwischen Rad und Aufbau über die Aktuatoren auf einem konstanten Niveau zu halten, wird vorgeschlagen, dass eine der Arbeits-Flächen jedes Aktuator-Kolbens halb so groß ist wie die andere Arbeits-Fläche dieses Aktuator-Kolbens.

Grundsätzlich bestehen verschiedene Ausgestaltungs-Möglichkeiten für ein erfindungsgemäßes aktives Fahrwerksystem. So können sämtliche Aktuatoren des Fahrwerksystems jeweils unabhängig voneinander ansteuerbar sein, wozu in der Versorgungsleitung zumindest einer der beiden Aktuator-Arbeitskammern ein den gewünschten Hydraulikdruck einregelndes Druckminderventil vorgesehen ist. Hiermit ist ein Maximum an Funktionalität bis hin zu einem Nickausgleich sowie der sog. Sky-Hook-Regelung (auch unter dem Begriff "fliegender Teppich" bekannt) sowie eine hohe dynamische Regelbarkeit erzielbar, jedoch ist andererseits der Energieverbrauch eines derartigen Systems relativ hoch, da die aus einem Einfedern eines Rades, d.h. aus einer Verringerung des Abstandes zwischen dem Aufbau und diesem Rad bereitgestellte Energie nicht weiter genutzt werden kann.

Energetisch günstiger ist es demgegenüber, wenn bezogen auf eine Fahrzeugachse mit zwei Rädern und folglich mit zwei Aktuatoren die beiden dem Aufbau zugewandten Aktuator-Arbeitskammern hydraulisch direkt miteinander verbunden sind. Bei tendenziellen Wankbewegungen des Fahrzeug-Aufbaus ist dann ein einfacher tendenzieller Austausch von Hydraulikmedium bzw. eine entsprechende Druckweiterleitung zwischen dem linken und rechten Aktuator dieser Achse möglich, ohne dass hierfür Hydraulikmedium separat gefördert werden muss.

Gezielte Maßnahmen zur Wankstabilisierung können bspw. über die den Rädern zugewandten Aktuator-Arbeitskammern einer Achse eingeleitet werden, insbesondere wenn die dem Rad zugewandte Fläche jedes Aktuatorkolbens größer und insbesondere doppelt so groß ist als die dem Aufbau zugewandte Fläche des Aktuator-Kolbens. In diesem Zusammenhang wird vorgeschlagen, dass die besagten Aktuator-Arbeitskammern über ein elektromagnetisches Richtungsventil konträr zueinander mit höheren oder niedrigerem aktiven Hydraulikdruck beaufschlagbar sind. Mit einer solchen Anordnung wird die hydraulische Versorgung, d.h. eine Pumpe zur Bereitstellung einer ausreichenden Hydraulikmenge unter ausreichendem Druck, nur mit den für die Wankstabilisierungs-Funktion benötigten Differenzdrücken belastet. Demgegenüber müsste bei einem volltragendem Aktivfeder-System ohne derartige Richtungsventile kontinuierlich ein mittlerer Arbeitskammerdruck in der Größenordnung von zumindest 100 bar bereitgestellt werden.

Nach einer vorteilhaften Weiterbildung der Erfindung kann ein insbesondere als Gleichgangzylinder ausgebildeter sog. Hubzylinder mit vier Arbeitskammern im hydraulischen Fahrwerksystem vorgesehen sein, von denen zwei auf einer Seite eines im Hubzylinder verschiebbar geführten Kolbens und die anderen beiden auf der anderen Seite dieses Kolbens liegen und wobei die erste Seite des Kolbens neben dem Hydraulikdruck der dem Aufbau zugewandten Aktuator-Arbeitskammern mit einer Niveauregel-Druckquelle beaufschlagt ist, während die zweite Kolbenseite mit dem Hydraulikdruck der beiden den Rädern zugewandten Aktuator-Arbeitskammern beaufschlagt ist. Über einen derartigen Hubzylinder kann eine Höhenregulierung bzw. Niveau-Regulierung des Fahrzeug-Aufbaus besonders einfach umgesetzt werden, und zwar über gezielte Einspeisung bzw. Zu- oder Abfuhr von Hydraulikmedium seitens der sog. Niveauregel-Druckquelle.

Energetisch besonders vorteilhaft ist es dabei, wenn auf den Kolben ein Energiespeicherelement, insbesondere in Form eines mechanischen Federelementes einwirkt, da in diesem sog. Energiespeicherelement zumindest ein Teil der bei einer durch Fahrbahn-Unebenheiten verursachten Aufbau-Hubbewegung oder Wankbewegung freiwerdenden Energie gespeichert und später wieder abgerufen und somit genutzt werden kann. Vorteilhaft ist es dabei, wenn auf jede Seite des Hubzylinder-Kolbens eine Druckfeder einwirkt.

Vergleichbar dem Hubzylinder kann ein insbesondere als Gleichgangzylinder ausgebildeter sog. Wankzylinder mit vier Arbeitskammern vorgesehen sein, von denen zwei auf einer Seite eines im Wankzylinder verschiebbar geführten Kolbens und die anderen beiden auf der anderen Seite dieses Kolbens liegen und wobei jede Kolbenseite neben dem Hydraulikdruck der dem zugeordneten Rad zugewandten Aktuator-Arbeitskammer mit einem entsprechenden Hydraulik-Steuerdruck beaufschlagt ist.

Die hieraus resultierende Trennung der Niveau-Regelfunktion und Wankfunktion ermöglicht den Einsatz einer hydraulischen Versorgung mit funktionsgebundenen, spezifisch optimal abgestimmten dynamischen Eigenschaften. Ferner bestehen deutliche Vorteile bezüglich des Energieverbrauchs, nachdem die Versorgungsquelle für Hydraulikmedium unter ausreichendem Druck lediglich Differenzdrücke aufbringen muss. Dabei ist eine bestmögliche Energieausnutzung erzielbar, wenn die Wirkflächen der zueinander komplementären Arbeitskammern, d.h. der jeweils einander entgegengerichtete Arbeitskammern am Hubzylinder bzw. am Wankzylinder gleich groß sind. Beim Hubzylinder sollten dabei die am Kolben vorhandenen Wirkflächen aller Arbeitskammern gleich groß sein, während es beim Wankzylinder ausreichend ist, wenn jeweils nur die beiden zueinander komplementären Arbeitskammern gleich große Wirkflächen aufweisen.

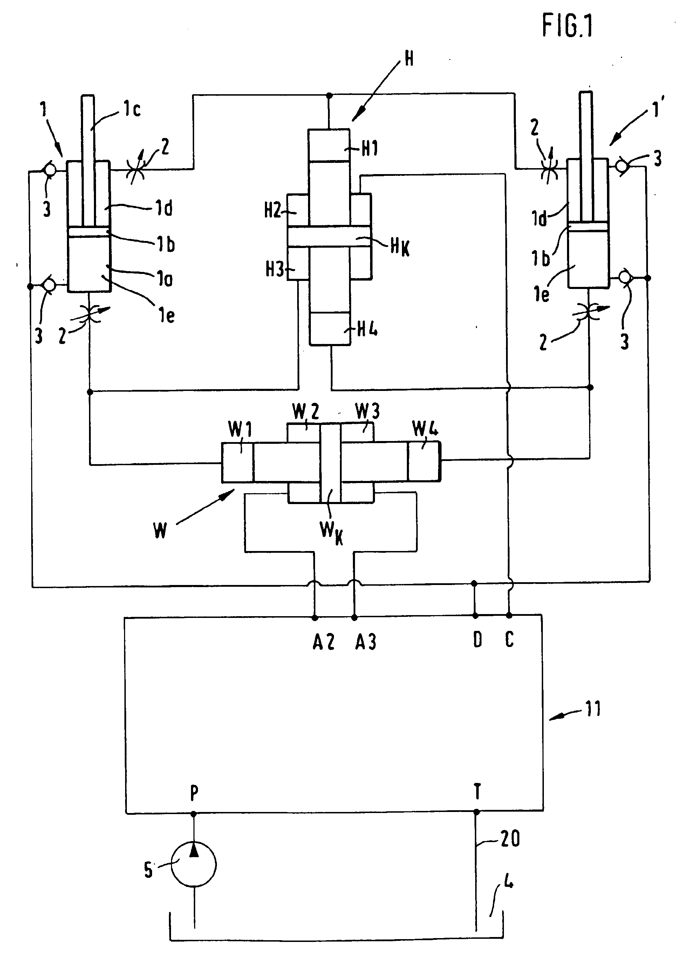

Im folgenden wird die Erfindung anhand verschiedener Ausführungsbeispiele weiter erläutert, wobei in den **Figuren 1, 2a, 2b, 3** jeweils ein hydraulischer Schaltkreis für die beiden Aktuatoren einer erfindungsgemäßen Fzg.-Achse (bspw. Vorderachse) mit zwei Aktuatoren (nämlich für das linke sowie und für das rechte Fzg.-Rad) dargestellt ist; die Ansteuerung der anderen Fzg.-Achse (bspw. Hinterachse) erfolgt analog.

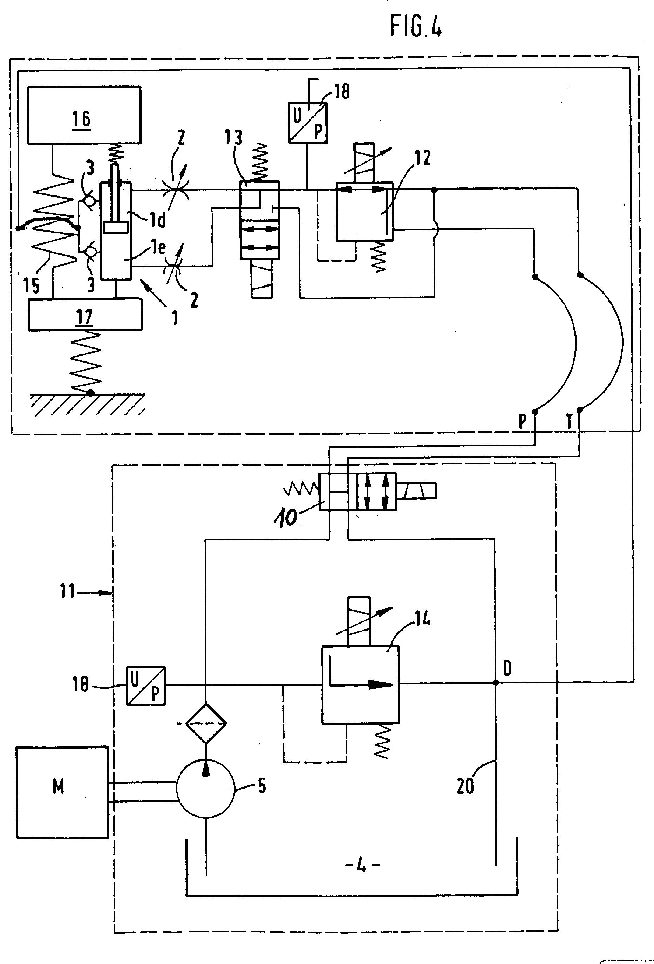

In **Figur 4** ist lediglich ein einziger Aktuator (für ein einzelnes Rad) dargestellt, da bei dieser Ausführungsform jeder Aktuator individuell ansteuerbar ist. Dafür zeigt Figur 4 symbolisch auch den Fahrzeug-Aufbau und das Fzg.-Radsystem sowie das dem Aktuator parallel geschaltete Federelement, d.h. die an sich übliche Tragfeder der Radaufhängung.

Neben den einzelnen Bezugszeichen, auf die im weiteren detailliert eingegangen wird, ist in den Figuren generell der Buchstabe "P" für den Anschluss an eine Hydraulikpumpe, d.h. für eine unter Pumpendruck stehende Hydraulikleitung verwendet, während der Buchstabe "T" für den Anschluss an einen Hydraulik-Tank, d.h. für eine mit dem Tankdruck beaufschlagte (und somit nahezu drucklose) Hydraulikleitung steht.

Zunächst bezugnehmend auf die **Figuren 1 - 3** ist sowohl dem linken (nicht dargestellten) Rad der (nicht dargestellten) Fahrzeugachse als auch dem rechten (ebenfalls nicht dargestellten) Rad dieser Achse ein Aktuator 1 bzw. 1' zugeordnet, der gleichzeitig als Dämpfer wirkt. Jedem Aktuator 1, 1' parallel geschaltet ist ein ebenfalls nicht dargestelltes herkömmliches Federelement, so dass sich jedes Fahrzeug-Rad über dieses Federelement sowie den Aktuator 1 bzw. 1' am (ebenfalls nicht gezeigten) Fahrzeug-Aufbau abstützt. Bezogen auf jedes Rad des Fahrzeuges ist die Anordnung dabei so wie in **Figur 4** dargestellt, d.h. dem Aktuator 1 parallel geschaltet ist zwischen dem Fahrzeug-Aufbau 16 und jedem Fahrzeug-Rad (hier als Achs-Federeinheit 17 dargestellt) eine an sich übliche Tragfeder, auch als Federelement 15 bezeichnet, angeordnet.

Im wesentlichen besteht jeder Aktuator 1, 1' aus einem Hydraulik-Zylinder 1a sowie einem darin im wesentlichen in Vertikalrichtung (bezogen auf den Einbauzustand im Fahrzeug) längsverschiebbar geführten Kolben 1b, dessen Kolbenstange 1c mit dem Fzg.-Aufbau verbunden ist, während das Fzg.-Rad bzw. ein Rad-Führungsglied am Aktuator-Zylinder 1a befestigt ist, wie aus Figur 4 hervorgeht. Jeder Aktuator 1, 1' besitzt somit zwei Arbeitskammern 1 d, 1 e, wobei hier die oberhalb des Kolbens 1b liegende Arbeitskammer 1d dem Aufbau 16 des Fahrzeugs, und die unterhalb des Kolbens 1b liegende Arbeitskammer 1e dem jeweiligen Rad 17 zugewandt ist.

Jeder Aktuator-Arbeitskammer 1d, 1d', 1e, 1e' ist eine eigene Hydraulik-Versorgungsleitung zugeordnet, wobei diese Versorgungsleitungen, über die selbstverständlich nicht nur eine Zufuhr von Hydraulikmedium zu den Arbeitskammern, sondern auch eine Ableitung von Hydraulikmedium aus diesen erfolgen kann, grundsätzlich keine Bezugsziffern tragen, sondern im weiteren durch ihre endseitigen Anschluss-Stellen bezeichnet werden. Im übrigen kann es auch ausreichend sein, wenn über die Versorgungsleitungen ein gewisser zusätzlicher Druck in die betreffende Aktuator-Arbeitskammer eingeleitet wird, da bereits hierdurch der Aktuator eine zusätzliche Kraft zwischen den Aufbau 16 und das Rad 17 einleiten kann, so dass hiermit eine Wankbewegung verhindert werden kann und sich der Fzg.-Aufbau 16 und somit auch der jeweilige Aktuator-Kolben 1b praktisch nicht bewegt.

In jeder Hydraulik-Versorgungsleitung ist nahe der jeweiligen Aktuator-Arbeitskammer (vorzugsweise an der Wand des Aktuator-Zylinders 1a angebracht) ein passives oder alternativ ein regelbares Dämpferventil 2 angeordnet, auf dessen bzw. deren Funktion weiter oben bereits ausführlich eingegangen wurde. Weiterhin ist jede Aktuator-Arbeitskammer 1d, 1e über ein die Abfuhr von Hydraulikmedium verhinderndes Rückschlagventil 3 mit einer sog. Minimaldruck-Versorgungsquelle verbunden, wobei auch die Funktion dieses bzw. dieser Rückschlagventil(e) 3 bereits weiter oben erläutert wurde. Die sog. Minimaldruck-Versorgungsquelle, die in den Ausführungsbeispielen nach den Figuren 1, 4 mit dem Buchstaben D und in den anderen Ausführungsbeispielen mit dem Buchstaben Cᵢ (i = 1, 2) bezeichnet ist, kann als Druckspeicher mit Druckregelventil oder auch nur als Tank-Rücklaufleitung ausgeführt sein und von einer Anordnung zur Versorgung mit Hydraulikmedium abgegriffen werden, die im folgenden kurz beschrieben wird.

Vorhanden ist eine Anordnung 11 zur Versorgung der Akuator-Arbeitskammern 1d, 1d', 1e, 1e' mit Hydraulikmedium in der jeweils gewünschten Weise, derart, dass entweder eine Niveauregulierung oder eine Wankstabilisierung des Fahrzeug-Aufbaus 16 umgesetzt werden kann. Bei der Variante nach Figur 4 ist aufgrund der absolut individuellen Aktuator-Ansteuerung zusätzlich ein Nickausgleich realisierbar. Neben den bereits genannten Hydraulik-Versorgungsleitungen für die Aktuator-Arbeitskammern besteht die besagte hydraulische Versorgungsanordnung 11 aus einem Tank 4 für das Hydraulikmedium, aus welchem eine bspw. vom Fahrzeug-Antriebsmotor oder von einem Elektromotor (jeweils mit M bezeichnet) angetriebene Pumpe 5 Hydraulikmedium in das bei den verschiedenen Ausführungsformen unterschiedlich gestaltete Hydrauliksystem fördert. Überschüssiges Hydraulikmedium wird über eine Rücklaufleitung beim Rücklauf 20 in den Tank 4 zurückgeführt.

Beim Ausführungsbeispiel nach **Figur 1** ist ein sog. Wankzylinder W sowie ein sog. Hubzylinder H vorgesehen. Beide sind als Gleichgangzylinder ausgebildet und weisen jeweils vier Arbeitskammern W₁, W₂, W₃, W₄ bzw. H₁, H₂, H₃, H₄ auf, von denen sich jeweils zwei auf der einen Seite eines im entsprechenden Zylinder geführten Kolbens W_{K} bzw. H_{K} befinden und die anderen beiden auf der anderen Seite des entsprechenden Kolbens W_{K} bzw. H_{K}. Selbstverständlich sind die einzelnen Arbeitskammern vom Wankzylinder bzw. von Hubzylinder gegeneinander hydraulisch getrennt. Sämtliche Wirkflächen des Hubzylinder-Kolbens H_{K} sind gleich groß, während beim Wankzylinder-Kolben W_{K} zumindest die Wirkflächen in den Kammern W₁ und W₄ bzw. W₂ und W₃ gleich groß sind.

Am Hubzylinder H wird die erste Seite des Kolbens H_{K} in der Arbeitskammer H₁ mit dem Hydraulikdruck der beiden dem Aufbau zugewandten Aktuator-Arbeitskammern 1d und 1d', deren Versorgungsleitungen wie ersichtlich direkt hydraulisch miteinander verbunden sind, beaufschlagt, und ferner über die Arbeitskammer H₂ mit einer sog. Niveauregel-Druckquelle, die an der mit dem Buchstaben C bezeichneten Stelle der hydraulischen Versorgungsanordnung 11 abgegriffen werden kann. Auf die andere Seite des Kolbens H_{K} wirkt der Hydraulikdruck der beiden den Rädern zugewandten Aktuator-Arbeitskammern 1e bzw. 1e' ein, nachdem die Versorgungsleitung der (linken) Aktuator-Arbeitskammer 1e mit der Arbeitskammer H₃ und die Versorgungsleitung der (rechten) Aktuator-Arbeitskammer 1e' mit der Arbeitskammer H₄ verbunden ist.

Über diesen Hubzylinder H kann dann eine Höhenregulierung bzw. Niveau-Regulierung des Fahrzeug-Aufbaus besonders einfach umgesetzt werden, wenn seitens der Niveauregel-Druckquelle C ein entsprechend gewünschtes Druckniveau an die Arbeitskammer H₂ angelegt und dementsprechend Hydraulikmedium aus dieser Arbeitskammer H₂ abgeführt oder in diese eingeleitet wird. In entsprechender Weise wird sich nämlich daraufhin der Kolben H_{K} im Hubzylinder H verschieben und als Folge hiervon verändert sich offensichtlich auch die Position der beiden Aktuator-Kolben 1b bzw. 1b' in den Aktuatoren 1 bzw. 1', und zwar werden beide Aktuator-Kolben 1b, 1b' wie ersichtlich in die gleiche Richtung verschoben.

Am Wankzylinder W wird zunächst jede Seite des integrierten Kolbens W_{K} mit dem Hydraulikdruck der dem zugeordneten Rad zugewandten Aktuator-Arbeitskammer 1e bzw. 1e' beaufschlagt, da die Versorgungsleitungen dieser Aktuator-Arbeitskammern nicht nur mit den parallel wirksamen Arbeitskammern H₃ bzw. H₄ des Hubzylinders H, sondern auch mit den einander entgegengerichtet wirkenden Arbeitskammern W₁ bzw. W₄ des Wankzylinders W verbunden sind. Die beiden anderen einander bezüglich des Kolbens W_{K} im Wankzylinder W entgegengerichteten Arbeitskammern W₂ und W₃ sind mit einem entsprechenden Hydraulik-Steuerdruck beaufschlagt, der von den mit A₂ bzw. A₃ bezeichneten Stellen der hydraulischen Versorgungsanordnung 11 abgegriffen wird.

Für die Realisierung einer Wankstabilisierungsfunktion wird somit über die Abgriffstellen A₂ und A₃ der Differenzdruck zwischen den Kammern W₂ und W₃ des Wankzylinders in an sich bekannter Weise geregelt, d.h. wenn der Hydraulikdruck an der Stelle A₃ größer ist als derjenige an der Stelle A₂, so wird der Kolben W_{K} im Wankzylinder W tendenziell nach links verschoben, wodurch der linke Aktuator-Kolben 1b tendenziell nach oben und der rechte Aktuator-Kolben 1b' wie gewünscht entgegengerichtet tendenziell nach unten verschoben wird, um einem Wanken entgegenzuwirken. Ausdrücklich darauf hingewiesen sei, dass das Wanken im wesentlichen verhindert werden soll, so dass die soeben beschriebene tendenzielle Verschiebung der Kolben praktisch nicht nennenswert messbar ist. Allein durch entsprechende Druckveränderungen in den jeweiligen Arbeitskammern kann oder soll einer beginnenden Wankbewegung des Fahrzeug-Aufbaus sofort entgegengewirkt werden.

Die bei dieser Ausführungsform nach **Figur 1** umgesetzte Verwendung zweier unabhängiger Zylinder W und H für die Wankbewegung und Hubbewegung bietet den Vorteil, dass beide Funktionen hinsichtlich Dynamik bzw. Führungsverhalten und Dämpfung bzw. Störungsverhalten völlig unabhängig voneinander ausgelegt werden können, weil eine konstruktive Entkopplung der Funktionen "Wankstabilisierung" und "Niveauregulierung" vorliegt. Sinnvoll erscheint beispielsweise die dynamisch schnelle Ausregelung der Wankbewegung bei gleichzeitig langsam ausgelegter Regelung für die Niveauregel-Funktion. Ebenfalls als Vorteil zu werten sind die unabhängig einstellbaren Druckniveaus für die Niveauregulierung und die Wankstabilisierung. Das führt zu einem energetisch günstigen Verhalten, weil die Wankstabilisierung bei einem relativ niedrigen Hydraulikdruck durchgeführt werden kann, ohne auf den Druckbedarf der Niveauregulierung Rücksicht nehmen zu müssen.

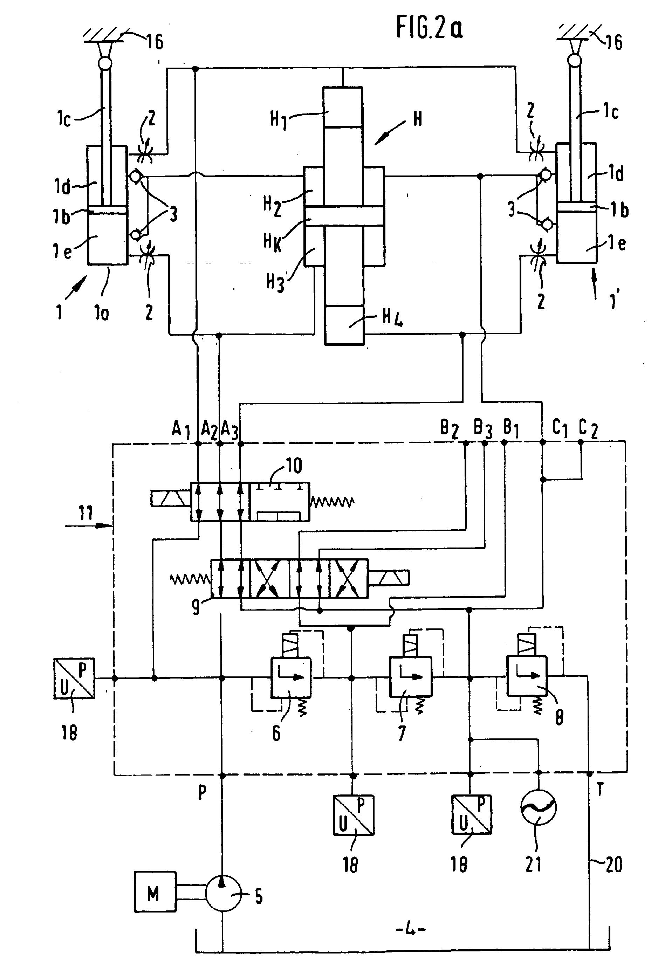

Beim Ausführungsbeispiel nach **Figur 2a** ist der Wankzylinder W aus Figur 1 durch eine direkt herstellbare Verbindung der Abgriffstellen A₂ und A₃ mit den Arbeitskammern 1e bzw. 1e' der Aktuatoren 1 bzw. 1' ersetzt. Der Hubzylinder H hingegen ist analog dem Ausführungsbeispiel nach Figur 1 ausgebildet und eingebunden. Demzufolge geschieht die Niveau-Regulierung analog Figur 1 über die im weiteren noch kurz erläuterten Abgriffstellen C₁ und C₂ der hydraulischen Versorgungsanordnung 11.

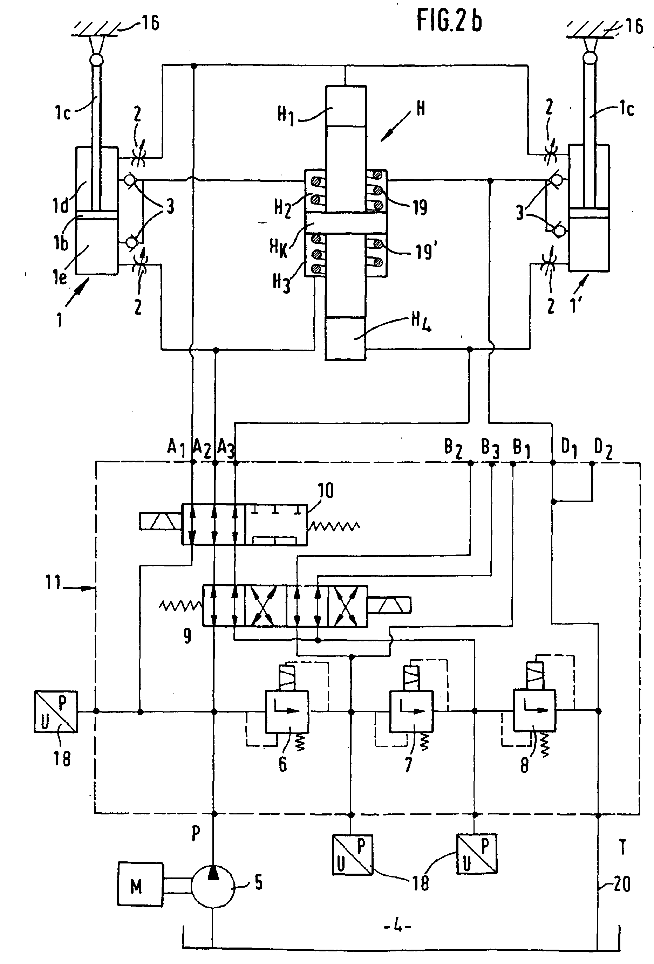

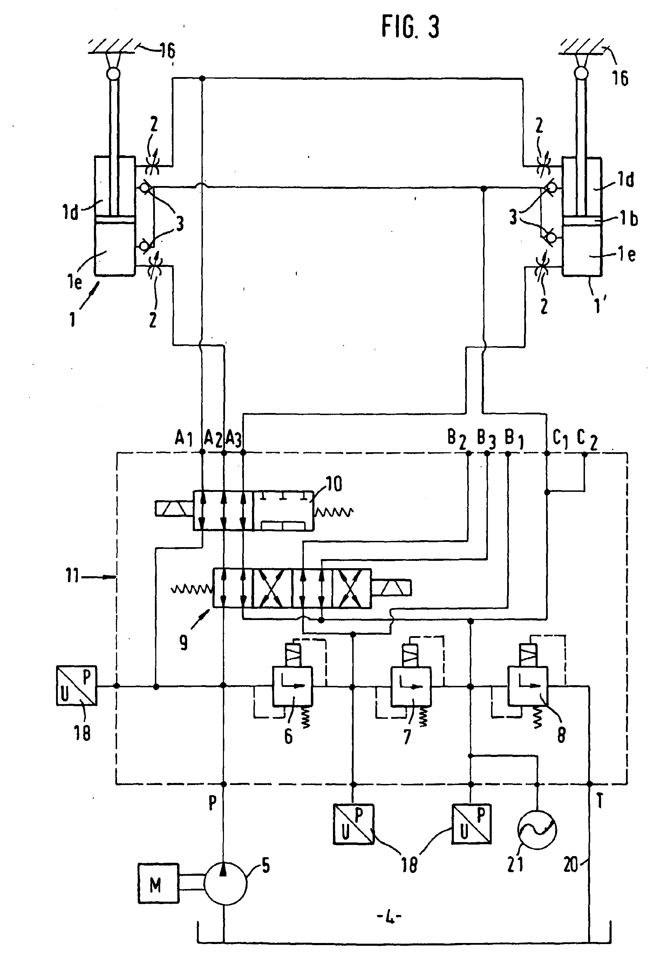

Beim Ausführungsbeispiel nach **Figur 2a** und den folgenden Ausführungsbeispielen nach den **Figuren 2b und 3** erfolgt die Versorgung der Aktuator-Arbeitskammern 1e und 1e' über stromab der Pumpe 5 in der hydraulischen Versorgungsanordnung 11 in Reihe geschaltete Druckbegrenzungsventile 6, 7, 8, die bevorzugt als Proportional-Druckbegrenzungsventile ausgebildet sind und die allgemein auch als Druckregelventile bezeichnet werden können. Zwischen diesen Druckbegrenzungsventilen 6, 7, 8, stromauf derer aufgrund ihrer Reihenschaltung jeweils ein bestimmter, von einem Druckbegrenzungsventil zum nächsten abnehmender oder maximal im wesentlichen gleich hoher Hydraulikdruckwert anliegt, und den Aktuator-Arbeitskammern 1e bzw. 1e' ist noch ein elektromagnetisches Richtungsventil 9 und hinter diesem ein Fail-Safe-Ventil (= Sicherheitsventil) 10 zwischengeschaltet. Ferner sind mit der Bezugsziffer 18 mehrere Drucksensoren bezeichnet, die den jeweiligen regelbaren Druckbegrenzungsventilen 6 - 8 zugeordnet sind, d.h. anhand von deren Mess-Signalen die Druckbegrenzungsventile 6 - 8 die gewünschten, von einer elektronischen Steuereinheit vorgegebenen Druckwerte einstellen können.

Grundsätzlich handelt es sich bei der hier verwendeten, jedoch in dieser Art nicht zwingend erforderlichen hydraulischen Versorgungsanordnung 11 mit den soeben genannten Ventilen 6 - 10 um einen sog. Ventilblock, wie er ähnlich bereits in der deutschen Offenlegungsschrift 196 49 187 für eine hydraulische Stabilisierungseinrichtung beschrieben wurde. Dabei wird hinsichtlich der Offenbarung dieser hydraulischen Versorgungsanordnung 11 ausdrücklich auf den Inhalt dieser DE 196 49 187 A1 verwiesen. Bspw. gewährleistet demnach das Fail-Safe-Ventil 10 einen Not-Betrieb bei Ausfall eines der Druckbegrenzungsventile 6 - 8, wobei unter normalen Betriebzuständen das Fail-Safe-Ventil 10 die figürlich dargestellte Position einnimmt und somit sämtliche Durchgänge freischaltet.

Hier ist nun das in Strömungsrichtung des Hydraulikmediums betrachtet hinterste Druckbegrenzungsventil 8 der Niveauregulierung zugeordnet, da hierfür ein relativ geringer Maximaldruck ausreichend ist, nachdem die Niveauregulierung nicht so schnell reagieren muss wie die Wankstabilisierung. Demzufolge sind die stromauf des Druckbegrenzungsventils 8 vorgesehenen Druckbegrenzungsventile 7 und 6, die auf zunehmend höhere Druckwerte angesteuert werden, der Wankstabilisierung zugeordnet. Das stromauf des Druckbegrenzungsventils 8 angeordnete Druckbegrenzungsventil 7 ist für die Wankstabilisierung an der Fahrzeug-Hinterachse vorgesehen, während das der Pumpe 5 am nächsten angeordnete Druckbegrenzungsventil 6 der Wankstabilisierung an der Fahrzeug-Vorderachse dient. Implizit ist hiermit sichergestellt, dass an der Vorderachse ein höheres Wankmoment erzeugt werden kann als an der Fzg.-Hinterachse, so wie dies aus Stabilitätsgründen auch grundsätzlich erwünscht ist, wobei sich der Druck des Vorderachs-Druckbegrenzungsventils 6 quasi aus der Summe von dessen Wert und demjenigen des Hinterachs-Druckbegrenzungsventils 7 ergibt.

Wie ersichtlich wird nun an der Abgriffsstelle A₂ der hydraulischen Versorgungsanordnung 11 der an die untere Arbeitskammer 1e des linken Aktuators 1 angelegte Hydraulikdruck abgegriffen, während an der Abgriffsstelle A₃ der hydraulischen Versorgungsanordnung der an die untere Arbeitskammer 1e' des rechten Aktuators 1' weitergegebene Hydraulikdruck anliegt. Von der Abgriffstelle A₁ der hydraulischen Versorgungsanordnung 11 werden wie ersichtlich die beiden oberen hydraulisch miteinander verbundenen Aktuator-Arbeitskammern 1d und 1d' sowie die Kammer H₁ des Hubzylinders H versorgt. Wie ersichtlich ist und wie bereits angesprochen wurde, kann an die Angriffsstellen A₂ bzw. A₃ der durch das Druckbegrenzungsventil 6 bzw. durch das Druckbegrenzungsventil 8 vorgegebene Druck angelegt werden.

Neben den den Vorderachs-Aktuatoren 1, 1' des Fahrzeugs zugeordneten Abgriffstellen A₁, A₂, A₃ sind an der hydraulischen Versorgungsanordnung 11 quasi analoge Abgriffstellen B₁, B₂, B₃ vorgesehen, die - wie bereits kurz erwähnt wurde - den nicht dargestellten Aktuatoren für die beiden Räder der Fahrzeug-Hinterachse zugeordnet sind. Dabei kann wie ersichtlich ist und wie bereits angesprochen wurde, an die Angriffsstellen B₂ bzw. B₃ der durch das Druckbegrenzungsventil 7 bzw. durch das Druckbegrenzungsventil 8 vorgegebene Druck angelegt werden.
Ferner sind an der hydraulischen Versorgungsanordnung 11 parallele und daher identische Abgriffstellen C₁ und C₂ vorgesehen, die in erster Linie die Niveauregel-Druckquelle für die Vorderachse respektive Hinterachse darstellen, und die demzufolge (wie für die Vorderachse dargestellt) mit der entsprechenden Kammer H₂ des Hubzylinders H verbunden sind. Im Sinne einer vorteilhaften Funktionsvereinigung bildet hier diese Niveauregel-Druckquelle C gleichzeitig die bereits erläuterte (und beim Ausführungsbeispiel nach den Figuren 1, 4 mit dem Buchstaben D bezeichnete) Minimaldruck-Versorgungsquelle, so dass wie ersichtlich hier auch eine Verbindung zwischen C₁ und sämtlichen Rückschlagventilen 3 der Aktuatoren 1, 1' vorliegt.

Bezugnehmend auf **Figur 2a** kann - wie ersichtlich - in der dargestellten Position des Richtungsventils 9 die Abgriffstelle A₂ mit einem höheren Druckniveau versorgt werden als die Abgriffstelle A₃, nachdem an A₂ der von den Druckbegrenzungsventilen 6 (und 7) eingestellte Hydraulikdruck anliegt, während an A₃ der vom Druckbegrenzungsventil 8 eingestellte Hydraulikdruck anliegt. Wie ersichtlich kann somit in dieser Schaltstellung des Richtungsventils 9 bei entsprechend angesteuerten Druckbegrenzungsventilen 6, 7, 8 der Kolben 1b des linken Aktuators 1 tendenziell nach oben verschoben werden, während sich der Kolben 1b' des rechten Aktuators 1' entgegengerichtet tendenziell nach unten verschiebt. Hiermit ist also eine Wankstabilisierung umsetzbar, wobei - analog der Erläuterungen in Verbindung mit Figur 1 - darauf hingewiesen sei, dass es sich bei der Wankstabilisierung lediglich um tendenzielle Verschiebebewegungen handelt, da tatsächlich eine Wankbewegung des Fzg.-Aufbaus soweit als möglich verhindert werden soll. Des besseren Verständnisses bzw. der besseren Übersichtlichkeit halber wird hier jedoch von tendenziellen Verschiebebewegungen gesprochen. Eine tendenzielle Verschiebebewegung in der zum vorhergehenden Absatz entgegengesetzten Richtung kann durch einfaches Umschalten des Richtungsventils 9 hervorgerufen werden.

Für die Niveauregulierungs-Funktion hingegen ist selbstverständlich kein derartiges Umschalten des Richtungsventils 9 (zwischen links und rechts) erforderlich, wobei hier aber eine nennenswerte Verschiebebewegung erfolgt, und zwar angesteuert von den Abgriffsstellen C₁, C₂, über die Arbeitskammer H₂ des Hubzylinders H (analog der Erläuterung zu Figur 1). Hier (d.h. bei diesem Ausführungsbeispiel nach **Figur 2a** sowie beim später noch erläuterten Ausführungsbeispiel nach **Figur 3** kann zwischen den Druckbegrenzungsventilen 7 und 8 ein Druckspeicher 21 geschaltet sein, um die für die Niveauregulierung benötigte Pumpenleistung durch Speicherung von bei einem Absenken des Fzg.-Aufbaus freiwerdender Energie zu minimieren. Aber auch alleine durch die Verwendung des Hubzylinders H besteht ein verringerter Energieaufwand, wobei der Hubzylinder den in Verbindung mit der Niveauregulierung vorliegenden niederfrequenten Dynamik-Anforderungen völlig genügen kann.

Grundsätzlich lässt sich mit der Ausbildung nach **Figur 2a** der Komponenten- und Package-Aufwand gegenüber der Variante nach Figur 1 erheblich reduzieren. Außerdem kommt es durch den Entfall des in Fig.1 vorgesehenen Wankzylinders W zu einer Verringerung der Leckageproblematik. Ein Unterschied gegenüber der Ausführungsvariante nach Figur 1 ist weiterhin, dass im Falle einer einseitigen oder wechselseitigen Störanregung der maximale Volumenstrom durch den Pumpenvolumenstrom begrenzt ist. Die Wankfunktion benötigt (in bestimmten Fahrsituationen) einen höheren Energieaufwand, weil die Druckversorgung der Abgriffstellen A; infolge der Reihenschaltung der Druckbegrenzungsventile 6 - 8 immer größer oder gleich der Niveaudruckversorgung Cᵢ sein muss. Dabei sei darauf hingewiesen, dass der Energieaufwand für die Wankfunktion beim Ausführungsbeispiel nach Figur 2a ebenso groß wie in beim Ausführungsbeispiel nach Figur 1, falls keine Niveauregelfunktion verwendet wird.

**Figur 2b** stellt eine Variante zum Ausführungsbeispiel nach Figur 2a dar, wobei hier keine eigenständige Abgriffstelle für die Niveauregel-Druckquelle vorgesehen ist. Ursächlich hierfür ist, dass in den Arbeitskammern H₂ und H₃ des Hubzylinders H jeweils ein Energiespeicherelement in Form eines mechanischen Federelementes 19, 19', d.h. vorgespannte insbesondere als Druckfedern wirkende Spiralfedern verbaut sind, die betragsgleich einander entgegengerichtet wirken. Mit diesen Federelementen 19, 19' ergeben sich Vorteile hinsichtlich des Energieverbrauchs des Gesamtsystems, weil der Hubzylinder H wie ein Energiespeicher (vergleichbar dem Druckspeicher 21 in Figur 2a) wirkt. Die vorgeschlagene Anordnung zeichnet sich dabei nicht nur durch eine einfache Konstruktion aus, sonder es erhält der Hubzylinder H infolge der Vorspannung durch die Federelemente 19, 19' eine stabile Gleichgewichtslage, so dass ein Lagesensor zur Regelung des Hubzylinders H entfallen kann.

An der hydraulischen Versorgungsanordnung nach **Figur 2b** sind nun parallel geschaltete Abgriffstellen D₁, D₂ der sog. Minimaldruck-Versorgungsquelle für die Rückschlagventile 3 der Aktuatoren 1, 1' der Fzg.-Vorderachse bzw. Fzg.-Hinterachse vorgesehen, die direkt mit dem Tank-Rücklauf 20 verbunden sind. Die Niveauregelfunktion wird jedoch weiterhin vom "hintersten" Druckbegrenzungsventil 8 übernommen. Dann kann über die Abgriffstellen A₁ und A₂ für die Vorderachse bzw. die Abgriffstellen B₁ und B₂ für die Hinterachse, an all denen der gleiche, vom Druckbegrenzungsventil 8 vorgegebene Hydraulikdruck anliegt, die Höhe des Fzg.-Aufbaus gegenüber den Rädern mittels der demzufolge parallel wirkenden (Vorderachs)-Aktuatoren 1, 1' sowie derjenigen der Hinterachse angehoben bzw. abgesenkt werden.

Beim Ausführungsbeispiel nach **Figur** 3 ist gegenüber demjenigen nach den Figuren 2a, 2b auch der Hubzylinder H entfernt. Ansonsten entspricht die hydraulische Verschaltung dem Ausführungsbeispiel nach Figur 2a. Diese Variante nach **Figur 3** weist den Vorteil des nochmals geringeren Komponentenaufwandes auf, für die Berücksichtigung von gleichsinnigen Hubanregungen muss jedoch Energie aufgewendet werden, indem beispielsweise das zu verdrängende Volumen über die Druckbegrenzungsventile 6 und 7 zunächst zum Tank 4, vorteilhafterweise jedoch in den bereits genannten Druckspeicher 21 abgelassen wird und zumindest bei einer darauffolgenden Wankstabilisierung die Pumpe 5 den entsprechenden Volumenstrom gegen den aktuell vorliegenden Druck neuerlich fördern muss. Das Weglassen des Hubzylinders H von Variante Fig.2a oder Fig.2b bringt zudem höhere Anforderungen an die Dynamik der Druckversorgung Cᵢ für die Niveauregelung mit sich.

Beim Ausführungsbeispiel nach **Figur** 4 sind gegenüber der Variante nach Figur 1 sowohl der Wankzylinder W als auch der Hubzylinder H zugunsten einer direkten Ansteuerung jedes einzelnen Aktuators 1 entfallen. Hier besteht also keine direkte hydraulische Verbindung zwischen den einzelnen, jeweils einem Rad des Fahrzeugs zugeordneten Aktuatoren, weshalb figürlich auch nur ein einziger Aktuator 1 dargestellt ist. Figürlich dargestellt ist des weiteren das eingangs erläuterte dem Aktuator 1 parallel geschaltete, zwischen dem Fahrzeug-Aufbau 16 und jedem Fahrzeug-Rad (hier als Achs-Federeinheit 17 dargestellt) angeordnete (übliche) Federelement 15.

Bei der Variante nach **Figur 4** ist somit jedem Aktuator 1 ein eigenes Druckminderventil 12 vorgeschaltet, das den benötigten Systemdruck für diesen Aktuator 1 einstellt. Mittels eines aktuator-individuellen Richtungsventils 13 kann festgelegt werden, ob lediglich die obere Aktuator-Arbeitskammer 1d oder auch die untere Aktuator-Arbeitskammer 1e mit diesem vom Druckminderventil 12 (entsprechend der Rückmeldung vom Steuergerät bzw. Drucksensor 18) eingestellten Hydraulikdruck beaufschlagt wird. Im übrigen ist es auch bei diesem Ausführungsbeispiel - ebenso wie bei den weiteren Ausführungsbespielen - vorteilhaft, wenn die Fläche des Aktuator-Kolbens 1b in der (hier) unteren Aktuator-Arbeitskammer 1e doppelt so groß ist wie die Wirkfläche des Aktuator-Kolbens 1b in der anderen, (hier) oberen Aktuator-Arbeitskammer 1d.

Bei diesem Ausführungsbeispiel nach **Figur** 4 ist für sämtliche Aktuatoren 1 eines Fahrzeugs selbstverständlich wieder eine zentrale hydraulische Versorgungsanordnung 11 vorgesehen, die hier neben den bereits erläuterten Elementen (Tank 4, Pumpe 5, Motor M, Fail-Safe-Ventil 10) ein sämtlichen am Fahrzeug parallel angeordneten Druckminderventilen 12 (der am Fzg. parallel angeordneten Aktuatoren 1) vorgeschaltetes zentrales Druckbegrenzungsventil 14 enthält.

Zurückkommend auf einen einzelnen Aktuator 1 sind in **Figur 4** im figürlich dargestellten Schaltzustand des Richtungsventils 13 die beiden Aktuator-Arbeitskammern 1d und 1e direkt hydraulisch miteinander verbunden, so dass in diesem Zustand der Aktuator 1 als "nicht aktive Stützfeder" und insbesondere als Dämpfer wirken kann. Im anderen Schaltzustand des Richtungsventils 13 erhält die obere Aktuator-Arbeitskammer 1d einen definiert höheren Hydraulikdruck als die untere Aktuator-Arbeitskammer 1e, so dass dann der Fahrzeug-Aufbau 16 über diese dann "aktive Stützfeder" gezielt gegenüber dem Fahrzeug-Rad 17 abgesenkt, d.h. durch zusätzliche Last quasi nach unten gedrückt werden kann.

Aufgrund der unabhängigen Ansteuerung aller Fzg.-Aktuatoren 1 ergibt sich bei der Variante nach **Figur 4** gegenüber den vorherigen Varianten (Figuren 1 - 3) eine Mehrfunktionalität, die neben Niveauregulierung und Wankausgleich u.a. einen Nickausgleich und ein maximal regelbares Eigenlenkverhalten umfasst, d.h. es liegen praktisch keine Restriktionen vor, so dass insbesondere auch die eingangs genannte aktive Sky-Hook-Dämpfung oder auch Sky-Hook-Regelung ("fliegender Teppich") umgesetzt werden kann. Auch kann eine variable Systemdämpfung realisiert werden. Nachteilig gegenüber den Varianten nach den Figuren 1 - 3 sind jedoch der höhere technische Aufwand der hydraulischen Versorgung sowie der höhere Leistungsbedarf.

Zusammenfassend zeichnet sich die vorliegende Erfindung durch folgende Vorteile aus, wobei noch darauf hingewiesen sei, dass durchaus eine Vielzahl von Details insbesondere konstruktiver Art abweichend von den gezeigten Ausführungsbeispielen gestaltet sein kann, ohne den Inhalt der Patentansprüche zu verlassen:

Grundsätzlich sind bei der Erfindung zwei Komponenten einer aktiven Radaufhängung, nämlich der Dämpfer und der Aktuator, in einem Bauteil zusammengefasst. Das führt zu einer günstigen Bauraumausnutzung. Die übliche (Trag-)Feder ist nach wie vor parallel zum Dämpfer bzw. Aktuator angeordnet, so dass die Radaufhängung nahezu unverändert bleibt gegenüber heute üblichen Bauformen. Insbesondere werden für die aktive Radaufhängung selbst keinerlei zusätzliche Bauteile benötigt. Die je nach Ausführungsvariante notwendigen Zusatzkomponenten (wie Wankzylinder W und Hubzylinder H) können nahezu an beliebigen Bauräumen platziert werden und müssen nicht im begrenzten Raum des Fzg.-Radhauses untergebracht werden.

Das Gesamtsystem bietet ein günstiges Führungsverhalten bei gleichzeitig geringer Leistungsaufnahme. Die beruht auf den geringeren Hydraulikvolumina, die zu bewegen sind. Für die Wankstabilisierung muss beispielsweise nur der Druck im Aktuator (Dämpfer) bereitgestellt werden, ohne dass sich die Kolbenstange des Aktuators bewegt. Hinsichtlich des Störverhaltens (Komfort) besitzt der Aktuator die Eigenschaften eines Dämpfers, die zudem bei Bedarf über ein verstellbares Dämpferventil kontinuierlich an den gegenwärtigen Fahrzustand angepasst werden können. Damit ist keine Komfortverschlechterung durch Einbau der aktiven Radaufhängung zu erwarten.

Die Funktionen "Wankstabilisierung" und "Niveauregulierung" sind durch die vorgeschlagene Verwendung eines Hubzylinders und Wankzylinders vollständig voneinander entkoppelt. Dies begünstigt die Auslegung der Regelung, denn bspw. können damit unterschiedliche Bandbreiten für die Wankstabilisierung und die Niveauverstellung realisiert werden. Ferner kann bei Verwendung von Hub- und Wankzylindern der Energiebedarf für die Ausregelung von Störanregungen stark reduziert werden.

Durch den Einsatz der genanten Rückschlagventile wird ein besseres Ansprechen der Aktuator-Dämpfer erreicht. Der Aufwand bei der Dämpferkonstruktion wird geringer, da keine zusätzlichen Antikavitationsmaßnahmen (wie z.B. Vorspannung durch Gasdruck) erforderlich sind. Denn die Kavitation wird bereits durch die besagten Rückschlagventile unterbunden.

### Bezugszeichenliste:

- 1, 1': Aktuator
- 1a: Zylinder
- 1 b: Kolben
- 1c: Kolbenstange
- 1d: obere Aktuator-Arbeitskammer
- 1 e: untere Aktuator-Arbeitskammer
- 2: Dämpferventil
- 3: Rückschlagventil
- 4: Tank
- 5: Pumpe
- 6: (erstes) Druckbegrenzungsventil
- 7: (zweites) Druckbegrenzungsventil
- 8: (drittes) Druckbegrenzungsventil
- 9: (elektromagnetisches) Richtungsventil
- 10: Fail-Safe-Ventil
- 11: hydraulische Versorgungsanordnung
- 12: Druckminderventil
- 13: aktuator-individuelles Richtungsventil
- 14: Druckbegrenzungsventil
- 15: Tragfeder oder Federelement, dem Aktuator 1 parallel geschaltet
- 16: Fzg:-Aufbau
- 17: Fzg.-Rad, dargestellt als Achs-Federeinheit
- 18: Drucksensor
- 19,19': mechanisches Federelement
- 20: Rücklauf (in Tank 4)
- 21: Druckspeicher

- Aᵢ: Abgriffstellen insbesondere für Wankstabilisierung (der Vorderachse)
- Bᵢ: Abgriffstellen insbesondere für Wankstabilisierung (der Hinterachse)
- Cᵢ: Niveauregel-Druckquelle (und Minimaldruck-Versorgungsquelle)
- D: Abgriff der Minimaldruck-Versorgungsquelle
- H: Hubzylinder
- Hᵢ: Arbeitskammern des Hubzylinders
- H_{K}: Kolben des Hubzylinders
- M: Motor für Pumpe 5
- P: Anschluss an die Pumpe 5, d.h. unter Pumpendruck stehend
- T: Anschluss an den Tank 4, d.h. unter Tankdruck stehend
- W: Wankzylinder
- Wᵢ: Arbeitskammern des Wankzylinders
- W_{K}: Kolben des Wankzylinders

## Patentansprüche

1. Aktives Fahrwerksystem eines Fahrzeugs, insbesondere eines zwei Achsen mit jeweils zwei Rädern aufweisenden Personenkraftwagens, wobei jedes Fahrzeug-Rad über ein Federelement (15) sowie über eine als Dämpfer und als hydraulischer Aktuator (1) wirkende hydraulische Kolben-Zylinder-Einheit (1) am Fahrzeug-Aufbau (16) abgestützt ist, wobei über den hydraulischen Aktuator (1) ohne Zwischenschaltung eines weiteren, nennenswerte Federwege erlaubenden Federelementes eine zusätzliche Kraft zwischen Rad (17) und Aufbau (16) einleitbar ist, wofür den im Zylinder (1 a) der Kolben-Zylinder-Einheit (1) beidseitig des Kolbens (1b) vorgesehenen Arbeitskammern (1d, 1 e) des Aktuators (1) jeweils eine eigene Hydraulik-Versorgungsleitung zugeordnet ist, von denen zumindest eine gezielt ansteuerbar ist,
**dadurch gekennzeichnet, dass** während einer Krafteinleitung zwischen Rad (17) und Aufbau (16) über den Aktuator (1) durch gezielte Ansteuerung zumindest einer Versorgungsleitung zwischen den Aktuator-Arbeitskammern (1d, 1e) im wesentlichen kein Austausch von Hydraulikmedium möglich ist und dass in den Hydraulik-Versorgungsleitungen der Aktuator-Arbeitskammern (1d, 1e) jeweils ein passives oder regelbares Dämpferventil (2) vorgesehen ist.

2. Fahrwerksystem nach Anspruch 1,
**dadurch gekennzeichnet, dass** jede Aktuator-Arbeitskammer (1d, 1e) über ein die Abfuhr von Hydraulikmedium verhinderndes Rückschlagventil (3) mit einer Minimaldruck-Versorgungsquelle (C, D) verbunden ist.

3. Fahrwerksystem nach Anspruch 1 oder 2,
**dadurch gekennzeichnet, dass** zur Regelung der in den Versorgungsleitungen aktiven Hydraulikdrücke zumindest ein Druckbegrenzungsventil (6, 7, 8), insbesondere ein Proportional-Druckbegrenzungsventil vorgesehen ist.

4. Fahrwerksystem nach einem der vorangegangenen Ansprüche,
**dadurch gekennzeichnet, dass** eine der Arbeits-Flächen jedes Aktuator-Kolbens (1b) halb so groß ist wie die andere Arbeits-Fläche dieses Aktuator-Kolbens.

5. Fahrwerksystem nach einem der vorangegangenen Ansprüche,
**dadurch gekennzeichnet, dass** sämtliche Aktuatoren (1) des Fahrwerksystems jeweils unabhängig voneinander ansteuerbar sind, wozu in der Versorgungsleitung zumindest einer der beiden Aktuator-Arbeitskammern (1d, 1e) ein den gewünschten Hydraulikdruck einregelndes Druckminderventil (12) vorgesehen ist.

6. Fahrwerksystem nach Anspruch 5,
**dadurch gekennzeichnet, dass** zwischen dem Druckminderventil (12) und dem Aktuator (1) ein Richtungsventil (13) vorgesehen ist, über das in dessen beiden Schaltpositionen eine der Aktuator-Arbeitskammern (1d) mit dem Druckminderventil (12) verbunden ist, während die andere Arbeitskammer (1e) alternativ mit der erstgenanten Arbeitskammer (1d) oder mit einer Minimaldruck-Versorgungsquelle (D) verbindbar ist.

7. Fahrwerksystem nach einem der Ansprüche 1 - 4,
**dadurch gekennzeichnet, dass** bezogen auf eine Fahrzeugachse mit zwei Aktuatoren (1, 1') die beiden dem Aufbau (16) zugewandten Aktuator-Arbeitskammern (1d, 1d') hydraulisch direkt miteinander verbunden sind.

8. Fahrwerksystem nach Anspruch 7,
**dadurch gekennzeichnet, dass** die beiden den Rädern (17) zugewandten Aktuator-Arbeitskammern (1 e, 1 e') einer Achse über ein elektromagnetisches Richtungsventil (9) konträr zueinander mit höheren oder niedrigerem aktiven Hydraulikdruck beaufschlagbar sind.

9. Fahrwerksystem nach Anspruch 7 oder 8,
**dadurch gekennzeichnet, dass** ein insbesondere als Gleichgangzylinder ausgebildeter Hubzylinder (H) mit vier Arbeitskammern (Hᵢ) vorgesehen ist, von denen zwei auf einer Seite eines im Hubzylinder (H) verschiebbar geführten Kolbens (H_{K}) und die anderen beiden auf der anderen Seite dieses Kolbens (H_{K}) vorgesehen sind, wobei die erste Seite des Kolbens neben dem Hydraulikdruck der dem Aufbau (16) zugewandten Aktuator-Arbeitskammern (1d, 1d') mit einer Niveauregel-Druckquelle (Cᵢ) beaufschlagt ist, während die zweite Kolbenseite mit dem Hydraulikdruck der beiden den Rädern (17) zugewandten Aktuator-Arbeitskammern (1e, 1e') beaufschlagt ist.

10. Fahrwerksystem nach Anspruch 9,
**dadurch gekennzeichnet, dass** auf den Kolben (H_{K}) ein Energiespeicherelement, insbesondere in Form eines mechanischen Federelementes (19, 19') einwirkt.

11. Fahrwerksystem nach einem der Ansprüche 7 - 9,
**dadurch gekennzeichnet, dass** die einzelnen Hydraulik-Versorgungsleitungen der Aktuatoren (1) mit einer hydraulischen Versorgungsanordnung verbunden sind, die neben einem Tank (4) sowie einer Pumpe (5) in Reihe angeordnete Druckbegrenzungsventile (6, 7, 8) aufweist, wobei das hinterste Druckbegrenzungsventil (8) der Niveauregulierung zugeordnet ist, während das stromauf hiervon angeordnete Druckbegrenzungsventil (7) der Wankstabilisierung an der Fahrzeug-Hinterachse dient und das der Pumpe (5) am nächsten angeordnete Druckbegrenzungsventil (6) für die Wankstabilisierung an der Fahrzeug-Vorderachse vorgesehen ist.

12. Fahrwerksystem nach einem der Ansprüche 7 - 10,
**dadurch gekennzeichnet, dass** ein insbesondere als Gleichgangzylinder ausgebildeter Wankzylinder (W) mit vier Arbeitskammern (Wᵢ) vorgesehen ist, von denen zwei auf einer Seite eines im Wankzylinder (W) verschiebbar geführten Kolbens (W_{K}) und die anderen beiden auf der anderen Seite dieses Kolbens vorgesehen sind, und wobei jede Kolbenseite mit dem Hydraulikdruck der dem zugeordneten Rad (17) zugewandten Aktuator-Arbeitskammer (1e, 1e') und mit einem entsprechenden Hydraulik-Steuerdruck beaufschlagt ist.

## Claims

1. An active chassis system of a vehicle, more especially a passenger car having two axles with two wheels in each case, wherein each vehicle wheel is supported via a spring element (15) and via a hydraulic piston/cylinder unit (1) acting as a damper and as a hydraulic actuator (1) on the vehicle body (16), wherein an additional force can be introduced between the wheel (17) and body (16) via the hydraulic actuator (1) without interposition of a further spring element allowing, significant spring excursions, for which purpose, a separate hydraulic supply line is associated with the working chambers (1d, 1 e) of the actuator (1) in each case, provided in the cylinder (1 a) of the piston/cylinder unit (1) on either side of the piston (1b), of which hydraulic supply lines at least one can be activated in a targeted manner, **characterised in that** during an introduction of a force between the wheel (17) and body (16) via the actuator (1) by targeted activation of at least one supply line, substantially no exchange of hydraulic medium is possible between the actuator working chambers (1d, 1e) and **in that** a passive or controllable damper valve (2) is provided in each case in the hydraulic supply lines of the actuator working chambers (1d, 1e).

2. A chassis system according to claim 1, **characterised in that** each actuator working chamber (1d, 1e) is connected to a minimum pressure supply source (C, D) via a check valve (3) preventing the removal of hydraulic medium.

3. A chassis system according to claim 1 or 2, **characterised in that** at least one pressure limitation valve (6, 7, 8), especially a proportional pressure limitation valve, is provided to control the hydraulic pressures that are active in the supply lines.

4. A chassis system according to any one of the preceding claims, **characterised in that** one of the working faces of each actuator piston (1b) is half the size of the other working face of this actuator piston.

5. A chassis system according to any one of the preceding claims, **characterised in that** all the actuators (1) of the chassis system can be activated, in each case, independently of one another, for which purpose a pressure reducing valve (12) adjusting the desired hydraulic pressure is provided in the supply line of at least one of the two actuator working chambers (1d, 1e).

6. A chassis system according to claim 5, **characterised in that,** provided between the pressure reducing valve (12) and the actuator (1) is a directional valve (13), via which, in the two switching positions thereof, one of the actuator working chambers (1d) is connected to the pressure reducing valve (12), while the other working chamber (1 e) can be connected alternatively to the first-mentioned working chamber (1d) or to a minimum pressure supply source (D).

7. A chassis system according to any one of claims 1 to 4, **characterised in that** based on a vehicle axle with two actuators (1, 1'), the two actuator working chambers (1d, 1d') facing the body (16) are directly connected to one another hydraulically.

8. A chassis system according to claim 7, **characterised in that** the two actuator working chambers (1e, 1e') of an axle which face the wheels (17) can be loaded via an electromagnetic directional valve (9), in a contrary manner to one another, with higher or lower active hydraulic pressure.

9. A chassis system according to claim 7 or 8, **characterised in that** a lifting cylinder (H) configured, in particular, as a synchronous cylinder, with four working chambers (Hᵢ) is provided, of which two are provided on one side of a piston (H_{K}) that is displaceably guided in the lifting cylinder (H) and the other two are provided on the other side of this piston (H_{K}), the first side of the piston, apart from the hydraulic pressure of the actuator working chambers (1d, 1d') facing the body (16) being loaded with a level control pressure source (C_{I}), while the second piston side is loaded with the hydraulic pressure of the two actuator working chambers (1e, 1e') facing the wheels (17).

10. A chassis system according to claim 9, **characterised in that** an energy accumulator element, in particular in the form of a mechanical spring element (19, 19') acts on the piston (H_{K}).

11. A chassis system according to any one of claims 7 to 9, **characterised in that** the individual hydraulic supply lines of the actuators (1) are connected to a hydraulic supply arrangement, which, apart from a tank (4) and a pump (5), has pressure limitation valves (6, 7, 8) arranged in series, the rear-most pressure limitation valve (8) being associated with the level control, while the pressure limitation valve (7) arranged upstream from this is used for rolling stabilisation at the vehicle rear axle and the pressure limitation valve (6) arranged closestito the pump (5) is provided for rolling stabilisation at the front vehicle axle.

12. A chassis system according to any one of claims 7 to 10, **characterised in that** a rolling cylinder (W), configured especially as a synchronous cylinder, with four working chambers (Wᵢ) is provided, of which two are provided on one side of a piston (W_{K}) displaceably guided in the rolling cylinder (W) and the other two are provided on the other side of this piston, and wherein each piston side is loaded with the hydraulic pressure of the actuator working chamber (1e, 1 e') facing the associated wheel (17) and with a corresponding hydraulic control pressure.

## Revendications

1. Système de suspension actif d'un véhicule, en particulier d'une voiture particulière présentant deux essieux de deux roues chacun, chaque roue s'appuyant, par l'intermédiaire d'un ressort (15) et d'une unité cylindre/piston hydraulique (1) servant d'amortisseur et d'actionneur hydraulique (1), sur la carrosserie (16) du véhicule, dans lequel une force supplémentaire peut être appliquée entre la roue (17) et la carrosserie (16) par l'intermédiaire de l'actionneur hydraulique (1) sans intercalage d'un autre ressort permettant des courses notables, et pour celà une conduite d'alimentation hydraulique propre est affectée aux chambres de travail (1d, 1e) de l'actionneur (1) prévues dans le cylindre (la) de l'unité cylindre/piston (1) des deux côtés du piston (1b), conduites d'alimentation hydrauliques dont au moins une peut être commandée de manière ciblée,
**caractérisé en ce que**
pendant l'application d'une force entre la roue (17) et la carrosserie (16) par l'intermédiaire de l'actionneur (1) grâce à la commande ciblée d'au moins une conduite d'alimentation, il n'y a quasiment aucun échange de fluide hydraulique entre les chambres de travail (1d, 1e) de l'actionneur possible, et on prévoit, dans chacune des conduites d'alimentation hydrauliques des chambres de travail d'actionneur (1d, 1e), une soupape d'amortissement (2) passive ou réglable.

2. Système de suspension selon la revendication 1,
**caractérisé en ce que**
chaque chambre de travail (1d, 1e) de l'actionneur est reliée à une source d'alimentation en pression minimale (C, D) par l'intermédiaire d'un clapet anti-retour (3) empêchant l'évacuation de fluide hydraulique.

3. Système de suspension selon la revendication 1 ou 2,
**caractérisé en ce qu'**
on prévoit au moins un limiteur de pression (6, 7, 8), en particulier un limiteur de pression proportionnel, pour réguler les pressions hydrauliques actives dans les conduites d'alimentation.

4. Système de suspension selon l'une quelconque des revendications précédentes,
**caractérisé en ce que**
l'une des surfaces de travail de chaque piston (1b) d'actionneur est moitié moins grande que l'autre surface de travail de ce piston d'actionneur.

5. Système de suspension selon l'une quelconque des revendications précédentes,
**caractérisé en ce qu'**
on peut commander tous les actionneurs (1) du système de suspension indépendamment l'un de l'autre, et pour celà on prévoit, dans la conduite d'alimentation d'au moins l'une des deux chambres de travail d'actionneur (1d, le), un réducteur de pression (12) régulant la pression hydraulique souhaitée.

6. Système de suspension selon la revendication 5,
**caractérisé en ce qu'**
entre le réducteur de pression (12) et l'actionneur (1), une soupape directionnelle (13) relie l'une des chambres de travail d'actionneur (1d) au réducteur de pression (12) dans les deux positions de commutation de cette soupape, alors que l'on peut relier l'autre chambre de travail (le), alternativement, à la première chambre de travail (1d) citée ou à une source d'alimentation en pression minimale (D).

7. Système de suspension selon l'une quelconque des revendications 1 à 4,
**caractérisé en ce que**
pour un essieu de véhicule comportant deux actionneurs (1, 1'), les deux chambres de travail d'actionneur (1d, 1d') tournées vers la carrosserie (16) sont directement reliées entre elles de façon hydraulique.

8. Système de suspension selon la revendication 7,
**caractérisé en ce que**
les deux chambres de travail d'actionneur (1e, 1e') d'un essieu tournées vers les roues (17) pouvant subir en sens inverse l'une de l'autre une pression hydraulique active plus élevée ou plus basse, par l'intermédiaire d'une soupape directionnelle électromagnétique (9).

9. Système de suspension selon la revendication 7 ou 8,
**caractérisé en ce qu'**
un vérin de levage (H) est configuré notamment comme un vérin à double tige, comportant quatre chambres de travail (Hi) dont deux sont prévues sur un côté d'un piston (HK) pouvant se déplacer dans le vérin de levage (H) et les deux autres de l'autre côté de ce piston (H_{K}), le premier côté du piston étant exposé non seulement à la pression hydraulique des chambres de travail d'actionneur (1d, 1d') tournées vers la carrosserie (16) mais aussi à une source de pression de réglage du niveau (Ci), alors que le deuxième côté du piston est exposé à la pression hydraulique des deux chambres de travail d'actionneur (1e, 1e') tournées vers les roues (17).

10. Système de suspension selon la revendication 9,
**caractérisé en ce qu'**
un élément d'accumulation de l'énergie, en particulier en forme de ressort mécanique (19, 19'), agit sur le piston (HK).

11. Système de suspension selon l'une quelconque des revendications 7 à 9,
**caractérisé en ce que**
les différentes conduites d'alimentation hydrauliques des actionneurs (1) sont reliées à un dispositif d'alimentation hydraulique qui présente, outre un réservoir (4) et une pompe (5), des limiteurs de pression (6, 7, 8) disposés en série, le limiteur (8) le plus à l'arrière étant affecté au réglage du niveau, alors que le limiteur (7) disposé en amont de celui-ci sert à la stabilisation du roulis sur l'essieu arrière du véhicule et le limiteur (6) disposé le plus près de la pompe (5) est prévu pour la stabilisation du roulis sur l'essieu avant du véhicule.

12. Système de suspension selon l'une quelconque des revendications 7 à 10,
**caractérisé en ce qu'**
un vérin de roulis (W) est configuré notamment comme un vérin à double tige comportant quatre chambres de travail (Wi), dont deux sont prévues sur un côté d'un piston (W_{K}) pouvant se déplacer dans le vérin de roulis (W) et les deux autres sur l'autre côté de ce piston, chaque côté du piston étant exposé à la pression hydraulique des chambres de travail d'actionneur (1e, 1e') tournées vers la roue (17) associée et à une pression de commande hydraulique correspondante.
